(19) Europäisches Patentamt
European Patent Office
Office européen des brevets

(11) Veröffentlichungsnummer: **0 053 283**
**B1**

(12) **EUROPÄISCHE PATENTSCHRIFT**

(45) Veröffentlichungstag der Patentschrift: **19.12.84**

(51) Int. Cl.³: **G 01 N 31/16**

(21) Anmeldenummer: **81109036.4**

(22) Anmeldetag: **27.10.81**

# (54) Verfahren zur Bestimmung von Wasser in wasserhaltigen Proben.

(30) Priorität: **21.11.80 DE 3043897**

(43) Veröffentlichungstag der Anmeldung: **09.06.82 Patentblatt 82/23**

(45) Bekanntmachung des Hinweises auf die Patenterteilung: **19.12.84 Patentblatt 84/51**

(84) Benannte Vertragsstaaten: **AT BE CH DE FR GB IT LI NL SE**

(56) Entgegenhaltungen:
**DE-A- 2 040 271**
**US-A- 3 874 794**
**Z. ANAL. CHEM., Band 270, 1974, Seiten 100-104, Springer-Verlag, Z.B. MAKSIMOVIC et al.: "Determination of empirical parameters of solvent polarity ET in binary mixtures by solvatochromic pyridinium-N-phenol betaine dyes"**
**JUSTUS LIEBIGS, Annalen der Chemie, Heft 11, 1976, C. REICHARDT et al.: "Der Substituenteneinfluss af das Elektronenanregungsspektrum der Pyridinium-N-phenolat-betaine"**
**J. AM. CHEM. SOC., Band 80, 5. Juli 1958, Seiten 3253-3269, E.M. KOSOWER: "The effect of solvent on spectra. I. A new empirical measure of solvent polarity: Z-values"**

(73) Patentinhaber: **Langhals, Heinz, Dr.**
**Sundgauallee 55**
**D-7800 Freiburg (DE)**

(72) Erfinder: **Langhals, Heinz, Dr.**
**Sundgauallee 55**
**D-7800 Freiburg (DE)**

(74) Vertreter: **Kraus, Walter, Dr. et al**
**Patentanwälte Kraus & Weisert Irmgardstrasse 15**
**D-8000 München 71 (DE)**

**EP 0 053 283 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

## Beschreibung

Die Erfindung betrifft ein Verfahren zur Bestimmung von Wasser in wasserhaltigen, festen, flüssigen oder gasförmigen Proben, vorzugsweise in organischen Lösungsmitteln. Mit dem erfindungsgemäßen Verfahren läßt sich Wasser auch in Spuren auf einfache Weise nachweisen.

Die Bestimmung von Wasser erfolgt heute üblicherweise über die Karl-Fischer-Titration (A.I. Vogel « A Textbook of quantitative inorganic Analysis », 4. Aufl. Longman London 1978, S. 688), die neben ihrer Störanfälligkeit kompliziert in ihrer Ausführung ist.

K. Dimroth und C. Reichardt [Z. Analyt. Chem. *215,* 344 (1966)] berichten über Untersuchungen an binären Lösungsmittelgemischen unter Verwendung solvatochromer Farbstoffe. Diese Autoren haben beobachtet, daß die Lage der längstwelligen Bande in UV-Spektrum solvatochromer Substanzen stark durch das verwendete Lösungsmittel beeinflußt wird. Diese Eigenschaft hat sich besonders gut zur Charakterisierung der Polarität von Lösungsmitteln erwiesen. In unpolaren Lösungsmitteln, wie z. B. Dioxan, absorbieren beispielsweise Pyridinium-N-phenolbetaine langwellig, in polaren Lösungsmitteln, wie z. B. Methanol, kurzwellig. Das Maximum dieser solvatochromen Absorption wird mit $\lambda_{max}$ bezeichnet. Aus der Absorptionswellenlänge $\lambda_{max}$ kann die molare Anregungsenergie $E_T$ nach der folgenden Gleichung berechnet werden :

$$E_T[MJ \cdot mol^{-1}] = 119{,}66/\lambda_{max}\ [nm].$$

Die Autoren haben für neun Gemische von organischen Lösungsmitteln mit Wasser Eichkurven aufgestellt. Diese Eichkurven gestatten es, den Wassergehalt eines Gemisches unbekannter Zusammensetzung zu bestimmen. Dieses bekannte Verfahren besitzt jedoch den Nachteil, daß erst Eichkurven aufgestellt werden müssen und daß es zeitraubend und langwierig ist.

Die beim obigen Verfahren verwendeten $E_T$-Werte sind allgemein zur Charakterisierung der Polarität organischer Lösungsmittel gut geeignet, und die $E_T$-Skala ist heute die am häufigsten verwendete Polaritätsskala [vergl. K. Dimroth und C. Reichardt « Angewandte Chemie » *91,* 119 (1979) ; K. Dimroth und C. Reichardt « Fortschritte der chemischen Forschung », Bd. 11/1, S. 1 (1968)].

Der vorliegenden Anmeldung liegt die Aufgabe zugrunde, einen einfachen, exakten Schnelltest zur Bestimmung von Wasser, insbesondere zur Bestimmung von Wasser in organischen Lösungsmitteln, zur Verfügung zu stellen.

Gegenstand der Erfindung ist ein Verfahren zur Bestimmung von Wasser in wasserhaltigen Proben, das dadurch gekennzeichnet ist, daß man zu einer Lösung oder Dispersion der Probe in einem Lösungsmittel oder direkt zu der flüssigen Probe eine solvatochrome Verbindung zugibt, die Solvatochromiebande $\lambda_{max}$ im UV/VIS-Spektrum bestimmt, den $E_T$-Wert (molare Anregungsenergie) der solvatochromen Substanz berechnet und gemäß der Gleichung (1)

$$c_{H_2O} = c^* \exp\ (E_T/E_D - E_T^0/E_D) - c^* \qquad (1)$$

die Wasserkonzentration bestimmt, wobei in der Gleichung (1)

$E_T$ die molare Anregungsenergie der solvatochromen Verbindung bedeutet ;

$E_T^0$ den $E_T$-Wert des reinen, wasserfreien Lösungsmittels bedeutet ;

$c^*$ und $E_D$ empirische Parameter sind, die aus Tabellen entnommen oder empirisch bestimmt werden können.

Der Anmelder hat überraschenderweise festgestellt, daß für alle untersuchten wäßrigen Systeme ein Zusammenhang zwischen den $E_T$-Werten solvatochromer Substanzen und $c_{H_2O}$ nach der obigen Gleichung (1) besteht.

Die $E_T$-Werte lassen sich aus $\lambda_{max}$ der Solvatochromiebande der solvatochromen Substanzen nach der folgenden Gleichung (2)

$$E_T[MJ \cdot mol^{-1}] = 119{,}66/\lambda_{max}\ [nm] \qquad (2)$$

berechnen. Zur Bestimmung der $E_T$-Werte löst man die solvatochrome Substanz in dem Lösungsmittel und mißt $\lambda_{max}$ in an sich bekannterweise. Die Konzentrationen werden vorzugsweise so gewählt, daß die Extinktion bei $\lambda_{max}$ im Extinktionsbereich von 0,4 bis 1,2, vorzugsweise 0,5 bis 1,0 und besonders bevorzugt 0,7 bis 1,0, liegen. Zur Bestimmung der $\lambda_{max}$-Werte kann man jedes geeignete UV-Spektrometer verwenden.

Die Gleichung (1) ist eine Zwei-Parameter-Gleichung, bei der $c^*$ und $E_D$ für jedes Lösungsmittel nach einer einfachen Prozedur bestimmt werden können, indem man Lösungen von Wasser in den bei der Analyse verwendeten, wasserfreien Lösungen mit bekannter Konzentration herstellt, zu den Lösungen eine solvatochrome Verbindung zugibt und die $E_T$-Werte dieser Lösungen bestimmt. Die jeweiligen Wassergehalte der Lösungen werden dann in Konzentrationen umgerechnet, und in einem Diagramm werden die erhaltenen $E_T$-Werte gegen ln $c_{H_2O}$ aufgetragen. Die Steigung $E_D$ und der Ordinatenabschnitt b des linearen Teils werden bestimmt, und $c^*$ wird nach der folgenden Gleichung (3)

$$c^* = \exp[(E_T{}^0 - b)/E_D] \quad (3)$$

berechnet.

Die Wasserkonzentrationen können in Gew.% nach der folgenden Gleichung (4) umgerechnet werden :

$$\text{Gew.\%}_{HcO} = c_{H_2O}\ [\text{mol/l}] \cdot Mg_{H_2O}/(\rho\ \text{Lösung}\ [\text{g/ml}] \cdot 10) \quad (4)$$

wobei in der Gleichung (4) $c_{H_2O}$ die molare Konzentration an Wasser, $Mg_{H_2O}$ das Molekulargewicht von Wasser und $\rho$ Lösung die Dichte der Lösung bedeuten.

Für häufig benutzte Lösungsmittel sind die Werte c* in der folgenden Tabelle I angegeben. $E_T{}^0$ ist die $E_T$-Wert des reinen, wasserfreien Lösungsmittels.

Bestimmung der Werte von Tabelle I :

Die Bestimmung von $c_{H_2O}$ wird nach einem einfachen Verfahren vorgenommen. Das Pyridiniumphenolbetain der folgenden Formel (I)

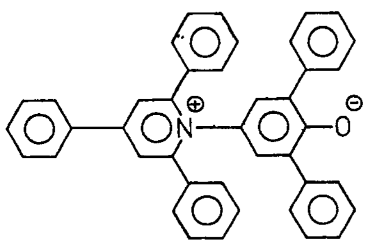

(I)

wird in geringer Menge (< 5mg) in den zu untersuchenden Lösungsmitteln gelöst. $\lambda_{max}$ von (I) in dieser Lösung wird bestimmt und mit Hilfe der Gleichung (2) wird der $E_T$-Wert berechnet. Dieser Wert wird mit den Werten $E_D$, $E_T{}^0$ und c* aus Tabelle (I) in Gleichung (1) eingesetzt und $c_{H_2O}$ wird berechnet.

Tabelle I

Konstanten von Gleichung (1) für häufig verwendete Lösungsmittel

| Lösungsmittel | $E_T^0$ [a,b] | C* [c] | $E_D$ [a] | $E_T^0/E_D$ |
|---|---|---|---|---|
| Aceton | 42,4 | 0,31 | 2,83 | 14,9 |
| Acetonitril | 46,0 | 0,15 | 2,07 | 22,2 |
| tert.-Butylalkohol | 43,9 | 1,01 | 2,82 | 15,6 |
| tert.-Butylhydroperoxid | 49,7 | 0,31 | 1,40 | 35,5 |
| Dimethylformamid | 43,8 | 11,43 | 9,24 | 4,74 |
| 1,4-Dioxan [d] | 36,0 | 0,58 | 4,34 | 8,29 |
| Pyridin | 40,2 | 5,48 | 7,09 | 5,67 |

[a]) In kcal · $mol^{-1}$ (1 kcal = 4,185 kJ).
[b]) Siehe auch C. Reichardt, Angew. Chem. *91*, 119 (1979).
[c]) In mol · $l^{-1}$ (1 kcal = 4,185 kJ).
[d]) Bei älteren, peroxidreichen Proben, die (I) zerstören, empfiehlt sich der Zusatz einer Base, z. B. Piperidin.

Mit dem erfindungsgemäßen Verfahren läßt sich der Wassergahalt zahlreicher zu analysierender Proben feststellen. Beispielsweise kann mit dem erfindungsgemäßen Verfahren der Wassergehalt von flüssigen, gasförmigen und festen Proben bestimmt werden. Bei flüssigen Proben wird der Wassergehalt direkt nach Gleichung (1) unter Verwendung eines solvatochromen Farbstoffs bestimmt. Als flüssige Proben kommen z. B. Lösungsmittel (als Medium für chemische Reaktionen, für Farben und Lacke, als Extraktionsmittel) in Frage. Als gasförmige Proben z. B. Synthesegase, Rauchgase usw. Das Verfahren eignet sich z. B. für eine Kontrolle des Wassergehalts von Gasen nach Gaswaschanlagen oder für die Bestimmung des Taupunktes. Ebenfalls können feste Proben untersucht werden, z. B. Bestimmung des Wassergehaltes in Polymeren, Naturstoffen, wie z. B. Stärke, Cellulose, Hydrat-bildenden Substanzen, wie z. B. Salze, in ihrer Zusammensetzung nicht definierten Proben, wie z. B. Bodenproben oder tierische und pflanzliche Gewebe.

Wasser kann erfindungsgemäß ebenfalls in anorganischen Flüssigkeiten bestimmt werden, z. B. in Mischungen von organischen Lösungsmitteln mit Schwefelkohlenstoff. Als anorganische Flüssigkeiten kommen z. B. Hydrazinhydrat, Hydroxylamin, Schwefeldioxid, Schwefelwasserstoff und Ammoniak (gegebenenfalls bei tieferer Temperatur) in Frage.

Bei dem erfindungsgemäßen Verfahren verwendet man als Lösungsmittel oder Dispersionsmittel beispielsweise Aceton, Acetonitril, tert-Butylalkohol, tert-Butylhydroperoxid, Dimethylformamid, 1,4-Dioxan oder Pyridin. Man kann auch Gemische solcher Lösungsmittel verwenden. Andere Lösungsmittel, die verwendet werden können, sind z. B. die in Angew. Chemie *91*, Seiten 124 und 125 (1979), beschrieben Lösungsmittel.

Bei dem erfindungsgemäßen Verfahren können die wasserhaltigen Proben per se verwendet werden, wenn sie flüssig sind. Im allgemeinen wird man jedoch flüssige oder auch feste Proben in einem der oben erwähnten Lösungsmittel lösen oder dispergieren. Man kann bei dem erfindungsgemäßen Verfahren auch Emulsionen oder Suspensionen einsetzen. Hinsichtlich der Art des Lösungsmittels gibt es keine Beschränkung, solange das Lösungsmittel mit dem solvatochromen Farbstoff und der zu analysierenden Probe keine unerwünschten Nebenwirkungen eingeht. Werden nach dem erfindungsgemäßen Verfahren Dispersionen oder Suspensionen analysiert, so muß man beachten, daß ein Teil des durchgestrahlten Lichtes gestreut wird. Dieses Phänomen ändert zwar nichts an der Lage von $\lambda_{max}$, es kann jedoch die Messung erschweren. Zur Bestimmung von $\lambda_{max}$ muß man in einem solchen Fall eventuell ein empfindliches Spektrometer verwenden.

Es ist nicht unbedingt erforderlich, daß wasserfreie Lösungsmittel verwendet werden. Es können auch Lösungsmittel mit einem geringen Wassergehalt verwendet werden, wobei die Wasserbestimmung dann als Differenzmethode erfolgt.

Erfindungsgemäß werden als solvatochrome Substanzen das oben erwähnte Pyridiniumphenolbetain der Formel (I) oder der sog. Kosower'sche Farbstoff der Formel (II)

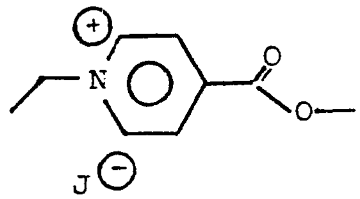

(II)

[E.M. Kosower, J. Am. Chem. Soc. *80*, 3253 (1953)] oder die von C. Reichardt, « Solvent Effects in Organic Chemistry » Verlag Chemie Weinheim, 1. Auflage 1979, S. 193 und 194, beschriebenen, solvatochromen Substanzen verwendet. Es ist besonders bevorzugt, das Pyridiniumphenolbetain der Formel (I) zu verwenden.

Das erfindungsgemäße Verfahren läßt sich bei Zimmertemperatur durchführen. Zur Bestimmung der Werte für die Tabelle und, sofern sehr genaue Analysenergebnisse erforderlich sind, ist es bevorzugt, das erfindungsgemäße Verfahren bei konstanter Temperatur durchzuführen. Dies ist jedoch nicht unbedingt erforderlich, da der Temperatureinfluß bei dem erfindungsgemäßen Verfahren innerhalb enger Grenzen liegt.

Das Verfahren kann bei beliebigen Temperaturen durchgeführt werden, bei denen der verwendete Farbstoff thermostabil ist. Bei sehr hohen Temperaturen ($> 100\,°C$) wird das Verfahren kompliziert, weil Wasser aus der Lösung verdampft, ebenso bei Temperaturen $< 0\,°C$, da dann Wasser auskristallisieren kann. Es sind daher Temperaturen zwischen 0 und 100 °C bevorzugt und am meisten Temperaturen um Zimmertemperatur.

Bei einer besonders bevorzugten, vereinfachten erfindungsgemäßen Ausführungsform erfolgt die Bestimmung des Wassergehalts nach der Gleichung (1) über einen visuellen Farbvergleich mit einer Farbskala. Dabei wird die Absorptionsfarbe der Lösung oder Dispersion visuell mit einer Farbskala (Absorptionsfarbe als Funktion von $\lambda_{max}$ der Absorption) verglichen und über diesen Vergleich $\lambda_{max}$ der Absorption bestimmt.

Das erfindungemäße Verfahren kann auch auf solche Weise durchgeführt werden, daß die solvatochromen Farbstoffe auf Feststoffe aufgezogen werden, z. B. auf Papier, so daß man Teststreifen erhält. Diese Teststreifen werden in die zu untersuchende Lösung getaucht. Je nach Wassergahalt und verwendetem Lösungsmittel verfärbt sich der Teststreifen. Durch einen Farbvergleich der Lösung mit einer Farbskala Absorptionsfarbe – $\lambda_{max}$ (z. B. M. Klessinger, Chemie in unserer Zeit *12*, 1 (1978)) wird $\lambda_{max}$ bestimmt und mit Hilfe von Gleichung (1) $c_{H_2O}$ berechnet.

Für das Ergebnis ist besonders von Bedeutung, daß ein logarithmischer Zusammenhang zwischen den $E_T$-Werten und $c_{H_2O} + c^*$ nach gleichung (1) besteht. Die relative Genauigkeit der Bestimmung von $c_{H_2O}$ ist damit über einen weiten Konzentrationsbereich konstant. $c_{H_2O}$ kann auch im Bereich geringer Wasserkonzentrationen mit großer Genauigkeit bestimmt werden.

Die folgenden Beispiele erläutern die Erfindung.

In allen folgenden Beispielen werden die UV-Spektren mit dem UV-Spektrophotometer DMR 21 der Firma Zeiss aufgenommen. Für eine überschlägige Konzentrationsbestimmung reicht ein visueller Vergleich der Lösung mit einer Farbskala.

Beispiel 1

Allgemeines Beispiel für die Wasserbestimmung in organischen Lösungsmitteln

Eine mit einem Stopfen versehene Glasküvette mit 1 cm Schichtdicke wird mit der zu untersuchenden Lösung unter Feuchtigkeitsausschluß bzw. mehrfachem Spülen der Küvette mit Lösungsmittel gefüllt. Das Lösungsmittel wird mit einer geringen Menge (< 5 mg) des Phenolbetains der Formel (I) versetzt und die Lage der Solvatochromiebande $\lambda_{max}$ im UV-Spektrum wird bestimmt. Die Konzentrationen sollten so gewählt werden, daß $\lambda_{max}$ im Extinktionsbereich von 0,7 ... 1,0 liegt. Für eine genaue Lokalisierung von $\lambda_{max}$ kann der Schnittpunkt der Verbindungslinie der Halbmesser mit der Absorptionskurve entsprechend der Mathias'schen Regel bestimmt werden.

$\lambda_{max}$ wird nach Formel (2) in den $E_T$-Wert umgerechnet und dieser Wert anschließend mit den Werten $E_T{}^0$, c* und $E_D$ von Tabelle I in die Formel (1) eingesetzt und $c_{H_2O}$ berechnet.

## Beispiel 2

Allgemeines Beispiel für die Bestimmung der Parameter $E_D$ und c* von weiteren Lösungsmitteln

In einen 10 ml Meßkolben werden 0,1, 1, 2 ... 9 ml Wasser einpipettiert und mit dem zu analysierenden, wasserfreien Lösungsmittel auf 10 ml aufgefüllt. Gemäß dem vorherigen Beispiel werden die $E_T$-Werte dieser Lösungen nach der Zugabe des Pyridiniumphenolbetains der Formel (I) bei 25 °C bestimmt. Der jeweilige Wassergehalt der Lösungen wird in Konzentrationen umgerechnet.

In einem Diagramm wird $E_T$ gegen ln $c_{H_2O}$ aufgetragen und die Steigung $E_D$ und der Ordinatenabschnitt b des linearen Teils werden bestimmt. c* wird nach Gleichung (3), wie in der Beschreibung angegeben, berechnet.

Für diese Prozedur steht das Rechenprogramm POLAR zur Verfügung, das auch die Meßwerte im nichtlinearen Teil des Diagramms berücksichtigt.

## Beispiel 3

Spezielles Beispiel für die Bestimmung der Parameter $E_D$ und c* von dem System « Wasser-Acetonitril »

Gemäß dem in Beispiel 2 aufgeführten Verfahren werden in einen 10 ml Meßkolben die in der folgenden Tabelle aufgeführten Milliliter an Wasser einpipettiert und dann wird der Meßkolben mit Acetonitril auf 10 ml aufgefüllt.

Das Lösungsmittel wird mit ca. 3 bis 5 mg des Phenol-Betains der Formel (I) versetzt und die Lage der Solvatochromiebande $\lambda_{max}$ im UV-Spektrum wird bestimmt.

Die $\lambda_{max}$-Werte werden gemäß der Gleichung (2) in die $E_T30$-Werte umgerechnet.

In der folgenden Tabelle sind die erhaltenen Ergebnisse aufgetragen.

Tabelle II

| ml $H_2O$ [1)] | $\lambda_{max}$ der Solvatochromiebande von $E_T30$ in den jeweiligen Lösungen | ml $H_2O$ in die molare Konzentration umgerechnet [2)] | $E_T30$ (aus $\lambda_{max}$) ausgerechnet | ln $c_{H_2O}$ |
|---|---|---|---|---|
| 0,01 | 614,0 | 0,055 | 46,6 | − 2,89 |
| 0,02 | 609,5 | 0,111 | 46,9 | − 2,20 |
| 0,03 | 602,0 | 0,166 | 47,5 | − 1,80 |
| 0,04 | 601,0 | 0,221 | 47,6 | − 1,51 |
| 0,05 | 591,5 | 0,277 | 48,3 | − 1,28 |
| 0,06 | 594,5 | 0,332 | 48,1 | − 1,10 |
| 0,07 | 591,2 | 0,388 | 48,4 | − 0,95 |
| 0,08 | 587,0 | 0,443 | 48,7 | − 0,81 |
| 0,09 | 585,0 | 0,498 | 48,9 | − 0,70 |
| 0,10 | 587,0 | 0,554 | 48,7 | − 0,59 |
| 0,15 | 576,5 | 0,830 | 49,6 | − 0,19 |
| 0,20 | 570,0 | 1,107 | 50,2 | 0,10 |
| 0,30 | 559,8 | 1,661 | 51,1 | 0,51 |
| 0,40 | 554,0 | 2,214 | 51,6 | 0,79 |
| 0,50 | 547,5 | 2,768 | 52,2 | 1,02 |
| 0,60 | 544,0 | 3,322 | 52,6 | 1,20 |
| 0,70 | 541,4 | 3,875 | 52,8 | 1,35 |
| 0,80 | 536,2 | 4,429 | 53,3 | 1,49 |
| 0,90 | 537,5 | 4,982 | 53,2 | 1,61 |
| 1,00 | 542,0 | 5,536 | 52,7 | 1,71 |
| 1,50 | 529,2 | 8,304 | 54,0 | 2,12 |

Tabelle II (Fortsetzung)

| ml $H_2O$ [1] | $\lambda_{max}$ der Solvatochromiebande von $E_T30$ in den jeweiligen Lösungen | ml $H_2O$ in die molare Konzentration umgerechnet [2] | $E_T30$ (aus $\lambda_{max}$) ausgerechnet | ln $c_{H_2O}$ |
|---|---|---|---|---|
| 2,00 | 526,0 | 11,072 | 54,4 | 2,40 |
| 3,00 | 517,0 | 16,608 | 55,3 | 2,81 |
| 4,00 | 511,8 | 22,144 | 55,9 | 3,10 |
| 5,00 | 505,8 | 27,680 | 56,5 | 3,32 |
| 6,00 | 500,2 | 33,216 | 57,2 | 3,50 |
| 7,00 | 493,5 | 38,752 | 57,9 | 3,66 |

[1]) Es wurde jeweils mit Acetonitril auf 10 ml aufgefüllt.
[2]) Um ml $H_2O$ in $c_{H_2O}$ umzurechnen, wurde der Faktor 5,536 verwendet.

Die Messungen erfolgten bei Temperaturen von 298,00 K.

In der beigefügten Figur 1 erfolgt eine logarithmische Auftragung der $E_T30$-Werte gegen ln $c_{H_2O}$. Durch den linearen Teil der Kurve wird die Gerade gelegt. Die Auswertung erfolgt von Hand :

$c^* = \exp\ [E_T^0 - b)/E_D]$
$E_T^0 = 46{,}0$
$b = 49{,}7$
$E_D = 2{,}07$
$\rightarrow c^* = 0{,}17$

Der genaue Wert unter Berücksichtigung aller Meßpunkte ist 0,15 (berechnet mit POLAR).

Erfolgt die Auswertung über einen Rechner, so werden Ergebnisse erhalten, die noch wesentlich besser korrelieren.

In der folgenden Tabelle III sind die Werte angegeben, die man bei der maschinellen Berechnung mit « POLAR » erhält.

Tabelle III

| $c_{H_2O}$ (mol/l) | $E_T30$ | ln $c_{H_2O}$ | ln (c/c* + 1) |
|---|---|---|---|
| 0,055 | 46,6 | − 1,59 | 0,32 |
| 0,111 | 46,9 | − 1,35 | 0,56 |
| 0,166 | 47,5 | − 1,16 | 0,75 |
| 0,221 | 47,6 | − 1,00 | 0,91 |
| 0,277 | 48,3 | − 0,86 | 1,05 |
| 0,332 | 48,1 | − 0,73 | 1,18 |
| 0,388 | 48,4 | − 0,62 | 1,29 |
| 0,443 | 48,7 | − 0,53 | 1,38 |
| 0,498 | 48,9 | − 0,44 | 1,47 |
| 0,554 | 48,7 | − 0,35 | 1,56 |
| 0,830 | 49,6 | − 0,02 | 1,89 |
| 1,107 | 50,2 | 0,23 | 2,14 |
| 1,661 | 51,1 | 0,59 | 2,50 |
| 2,214 | 51,6 | 0,86 | 2,77 |
| 2,768 | 52,2 | 1,07 | 2,98 |
| 3,322 | 52,6 | 1,24 | 3,15 |
| 3,875 | 52,8 | 1,39 | 3,30 |
| 4,429 | 53,3 | 1,52 | 3,43 |
| 4,982 | 53,2 | 1,64 | 3,54 |
| 5,536 | 52,7 | 1,74 | 3,65 |
| 8,304 | 54,0 | 2,13 | 4,04 |
| 11,072 | 54,4 | 2,42 | 4,33 |
| 16,608 | 55,3 | 2,82 | 4,73 |
| 22,144 | 55,9 | 3,10 | 5,01 |
| 27,680 | 56,5 | 3,33 | 5,24 |
| 33,216 | 57,2 | 3,51 | 5,42 |
| 38,752 | 57,9 | 3,66 | 5,57 |

Korrelationskoeffizient : 0,998 77 Sigma ED : 0,023 580

statistische Auswertung der Meßwerte

In der Figur 2 sind die Ergebnisse der maschinellen Auswertung dargestellt. Auftragen von $E_T30 \rightarrow$

$$\ln[(c_{H_2O}/c^*) + 1]$$

angegeben.

Berechnungsbeispiel

gemessene Wellenlänge einer Lösung mit unbekanntem Wassergehalt :

$$\lambda_{max} = 541{,}4 \text{ nm} \rightarrow E_T30 = 52{,}8$$
(nach Formel 2)

Konstanten nach Gleichung 1 (Tab. 1)

$E_T{}^0 = 46{,}0$
$E_T{}^0/E_D = 22{,}2$
$E_D = 2{,}07$
$c^* = 0{,}15$

$c_{H_2O} = c^* \cdot \exp(E_T/E_D - E_T{}^0/E_D) - c^*$
$c_{H_2O} = 3{,}9 \text{ mol} \cdot l^{-1}$

(eingestellt waren $3{,}88 \text{ mol} \cdot l^{-1}$)

Der Fehler kann mit besseren Geräten noch weiter verringert werden.

**Ansprüche**

1. Verfahren zur Bestimmung von Wasser in wasserhaltigen Proben, dadurch gekennzeichnet, daß man zu einer Lösung oder Dispersion der Probe in einem Lösungsmittel oder direkt zu der flüssigen Probe eine solvatochrome Verbindung zugibt, die Solvatochromiebande $\lambda_{max}$ im UV/VIS Spektrum bestimmt, den $E_T$-Wert (molare Anregungsenergie) der solvatochromen Substanz berechnet und gemäß der Gleichung (1)

$$c_{H_2O} = c^* \exp(E_T/E_D - E_T{}^0/E_D) - c^* \quad (1)$$

die Wasserkonzentration bestimmt, wobei in der Gleichung (1)
$E_T$ die molare Anregungsenergie der solvatochromen Verbindung bedeutet ;
$E_T{}^0$ den $E_T$-Wert des reinen, wasserfreien Lösungsmittels bedeutet ;
$c^*$ und $E_D$ empirische Parameter sind, die aus Tabellen entnommen oder empirisch bestimmt werden können.

2. Verfahren nach Anspruch 1, dadurch gekennzeichnet, daß der $E_T$-Wert der solvatochromen Verbindung nach der Gleichung (2)

$$E_T\ [\text{MJ} \cdot \text{mol}^{-1}] = 119{,}66/\lambda_{max}\ [\text{nm}], \quad (2)$$

wobei $E_T$ die zuvor gegebene Bedeutung besitzt, berechnet wird.

3. Verfahren nach Anspruch 1, dadurch gekennzeichnet, daß man zur Bestimmung der empirischen Parameter $E_D$ und $c^*$ Lösungen von Wasser in dem bei der Analyse verwendeten wasserfreien Lösungsmittel mit bekannter Konzentration herstellt, zu den Lösungen eine solvatochrome Verbindung zugibt und die $E_T$-Werte dieser Lösungen bestimmt, die jeweiligen Wassergehalte der Lösungen in Konzentrationen umrechnet und in einem Diagramm die erhaltenen $E_T$-Werte gegen $\ln c_{H_2O}$ aufträgt, die Steigung $E_D$ und den Ordinatenabschnitt b des linearen Teils bestimmt und $c^*$ nach der Gleichung (3)

$$c^* = \exp\ [(E_T{}^0 - b)/E_D] \quad (3)$$

berechnet, wobei in der obigen Formel
$c^*$ und $E_D$ die zuvor gegebenen Bedeutungen besitzen,
$E_T{}^0$ die Anregungsenergie des reinen Lösungsmittels bedeutet,
b der Ordinatenabschnitt des linearen Teils der erhaltenen Kurven bedeutet,
$E_D$ die Steigung des linearen Teils der erhaltenen Kurve bedeutet.

4. Verfahren nach einem der Ansprüche 1, 2 oder 3, dadurch gekennzeichnet, daß die Konzentrationen so gewählt werden, daß $\lambda_{max}$ im Extinktionsbereich von 0,6 bis 1,0 liegt.

5. Verfahren nach einem der Ansprüche 1 bis 4, dadurch gekennzeichnet, daß man bei Vorliegen der Probe als organisches Lösungsmittel mit geringem Wassergehalt oder als Wasserhaltiges Gas diese durch eine definierte Menge eines hochsiedenden Lösungsmittels leitet oder bei feden Proben diese in einer definierten Menge eines Lösungsmittels auflöst oder suspendiert.

6. Verfahren nach einem der Ansprüche 1 bis 5, dadurch gekennzeichnet, daß man als Lösungsmittel Aceton, Acetonitril, tert-Butylalkohol, tert-Butylhydroperoxid, Dimethylformamid, 1,4-Dioxan oder Pyridin verwendet.

7. Verfahren nach einem der Ansprüche 1 bis 6, dadurch gekennzeichnet, daß man als solvatochrome Substanz das Pyridiniumphenolbetain der folgenden Formel (I)

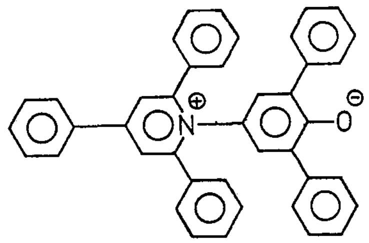

(I)

oder den Kosower'schen Farbstoff der Formel (II)

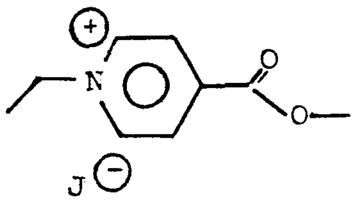

(II)

verwendet.

8. Verfahren nach einem der Ansprüche 1 bis 7, dadurch gekennzeichnet, daß die Messungen bei konstanter Temperatur durchgeführt werden.

9. Verfahren nach einem der vorhergehenden Ansprüche, dadurch gekennzeichnet, daß die Bestimmung von Wasser nach der Gleichung (1) über einen visuellen Farbvergleich mit einer Farbskala vorgenommen wird.

10. Verfahren nach einem der vorhergehenden Ansprüche, dadurch gekennzeichnet, daß die solvatochromen Substanzen auf feste Materialien aufgezogen sind und daß die Bestimmung von Wasser mittels solcher Materialien, z. B. Teststreifen und Vergleich, erfolgt.

**Claims**

1. A process for determining water in samples containing water, characterized in that a solvatochromic compound is added to a solution or dispersion of the sample in a solvent or directly to the liquid sample, the solvatochromism band $\lambda_{max}$ in the UV/VIS. Spectrum is determined, the $E_T$-value (molar excitation energy) of the solvatochromic substance is calculated and the water concentration determined in accordance with the following equation

$$c_{H_2O} = c^* \exp (E_T/E_D - E_T^0/E_D) - c^* \quad (1)$$

wherein

$E_T$ is the molar excitation energy of the solvatochromic compound ;

$E_T^0$ is the $E_T$-value of the pure anhydrous solvent ;

$c^*$ and $E_D$ are empirical parameters which may be taken from Tables or empirically determined.

2. A process as claimed in Claim 1, characterized in that the $E_T$-value of the solvatochromic compound is calculated in accordance with the following equation :

$$E_T\ [\mathrm{MJ} \cdot \mathrm{mol}^{-1}] = 119.66/\lambda_{max}\ [\mathrm{nm}] \quad (2)$$

wherein $E_T$ is as defined before.

3. A process as claimed in Claim 1, characterized in that, to determine the empirical parameters $E_D$ and $c^*$, solutions of water in the anhydrous solvent used for analysis are prepared with a known

concentration, a solvatochromic compounds is added to the solutions and the $E_T$-values of these solutions is determined, the respective water contents of the solutions are converted into concentrations and the $E_T$-values obtained are plotted against ln $c_{H_2O}$ in a graph, the gradient $E_D$ and the ordinate section b of the linear part are determined and c* is calculated in accordance with the following equation :

$$c^* = \exp\,[(E_T^0 - b)/E_D] \qquad (3)$$

wherein

c* and $E_D$ are as defined before,

$E_T^0$ is the excitation energy of the pure solvent,

b is the ordinate section of the linear part of the curves obtained,

$E_D$ is the gradient of the linear part of the curve obtained.

4. A process as claimed in Claim 1, 2 or 3, characterized in that the concentrations are selected in such a way that $\lambda_{max}$ lies in the extinction range of 0.6 to 1.0.

5. A process as claimed in any of Claims 1 to 4, characterized in that, where the sample is an organic solvent of low water content or a water-containing gas, it is passed through a defined quantity of a high-boiling solvent or, where the samples are solid, they are dissolved or suspended in a defined quantity of a solvent.

6. A process as claimed in any of Claims 1 to 5, characterized in that acetone, acetonitrile, tert.-butyl alcohol, tert.-butyl hydroperoxide, dimethyl formamide, 1,4-dioxane or pyridine is used as the solvent.

7. A process as claimed in any of Claims 1 to 6, characterized in that the solvatochromic compound used is a pyridinium phenol betaine corresponding to the following formula

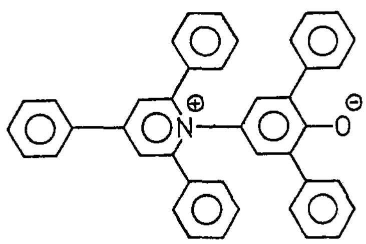

(I)

or a Kosower dye corresponding to the following formula

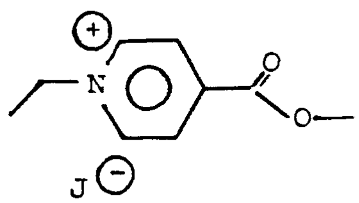

(II)

8. A process as claimed in any of Claims 1 to 7, characterized in that the measurements are carried out at a constant temperature.

9. A process as claimed in any of the preceding Claims, characterized in that the determination of water in accordance with equation (1) is carried out by a visual color comparison with a color scale.

10. A process as claimed in any of the preceding Claims, characterized in that the solvatochromic compound is absorbed on solid materials and in that the determination of water is carried out using such materials, for example test strips and comparison.

**Revendications**

1. Procédé pour la détermination de l'eau dans des échantillons contenant de l'eau, caractérisé en ce que l'on ajoute à une solution ou dispersion de l'échantillon dans un solvant, ou directement à l'échantillon liquide, un composé solvatochrome, en ce que l'on détermine les bandes de solvatochromie $\lambda_{max}$ dans le spectre UV/VIS, en ce que l'on calcule la valeur $E_T$ (énergie molaire d'excitation) de la substance solvatochrome et en ce que l'on détermine la concentration d'eau selon l'équation (1) :

$$c_{H_2O} = c^*\exp(E_T/E_D - E_T^0/E_D) - c^* \qquad (1)$$

dans laquelle

$E_T$ signifie l'énergie molaire d'excitation du composé solvatochrome ;

$E_T^0$ signifie la valeur $E_T$ du solvant pur anhydre ;

$c^*$ et $E_D$ sont des paramètres empiriques que l'on peut tirer de tableaux ou déterminer empiriquement.

2. Procédé selon la Revendication 1, caractérisé par le fait que l'on calcule la valeur $E_T$ du composé solvatochrome selon l'équation (2)

$$E_T\ [Mj \cdot mol^{-1}] = 119{,}66/\lambda_{max}\ [nm], \quad (2)$$

dans laquelle $E_T$ a la signification donnée précédemment.

3. Procédé selon la Revendication 1, caractérisé en ce que pour déterminer les paramètres empiriques $E_D$ et $c^*$, on prépare des solutions d'eau dans le solvant anhydre utilisé dans l'analyse, à une concentration connue, l'on ajoute aux solutions un composé solvatochrome et l'on détermine les valeurs $E_T$ de ces solutions, l'on convertit la teneur respective en eau des solutions en concentrations et l'on porte sur un graphique les valeurs $E_T$ obtenues en fonction de ln $c_{H_2O}$, l'on détermine la pente $E_D$ et le segment d'ordonnées b de la partie linéaire et l'on calcule $c^*$ d'après l'équation (3)

$$c^* = \exp\ [(E_T^0 - b)]\ [E_D] \quad (3)$$

dans laquelle

$c^*$ et $E_D$ ont les significations données précédemment,

$E_T^0$ signifie l'énergie d'excitation du solvant pur,

b signifie le segment d'ordonnées de la partie linéaire des courbes obtenues,

$E_D$ signifie la pente de la partie linéaire de la courbe obtenue.

4. Procédé selon l'une des revendications 1, 2 et 3, caractérisé par le fait que l'on choisit les concentrations de façon telle que $\lambda_{max}$ se situe dans le domaine d'extinction de 0,6 à 1,0.

5. Procédé selon l'une des revendications 1 à 4, caractérisé en ce que dans le cas où l'échantillon est sous forme de solvant organique à faible teneur en eau ou sous forme de gaz contenant de l'eau, on fait passer ceux-ci à travers une quantité définie d'un solvant à point d'ébullition élevé ou, dans le cas d'échantillons solides, on dissout ceux-ci ou on les met en suspension dans une quantité définie d'un solvant.

6. Procédé selon l'une des revendications 1 à 5, caractérisé en ce que l'on utilise comme solvant l'acétone, l'acétonitrile, l'alcool butylique tertiaire, le peroxyde de butyle tertiaire, la dimethylformamide, le 1,4-dioxanne ou la pyridine.

7. Procédé selon l'une des revendications 1 à 6, caractérisé en ce que l'on utilise comme substance solvatochrome, la pyridiniumphénolbétaïne de formule (I) suivante :

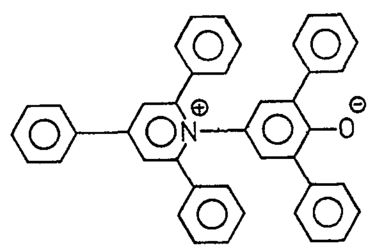

(I)

ou le colorant de Kosower de formule (II)

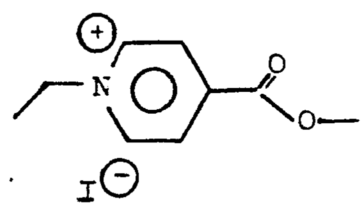

(II)

8. Procédé selon l'une des revendications 1 à 7, caractérisé par le fait que l'on effectue les mesures à température constante.

9. Procédé selon l'une des revendications précédentes, caractérisé par le fait que l'on effectue la détermination de l'eau d'après l'équation (1) en passant par une comparaison visuelle de couleur avec une échelle de couleurs.

10. Procédé selon l'une des revendications précédentes, caractérisé par le fait que les substances solvatochrome sont fixées sur des matières solides et que la détermination de l'eau s'effectue au moyen de telles matières, par exemple de bandes d'essai et par comparaison.

Fig. 1

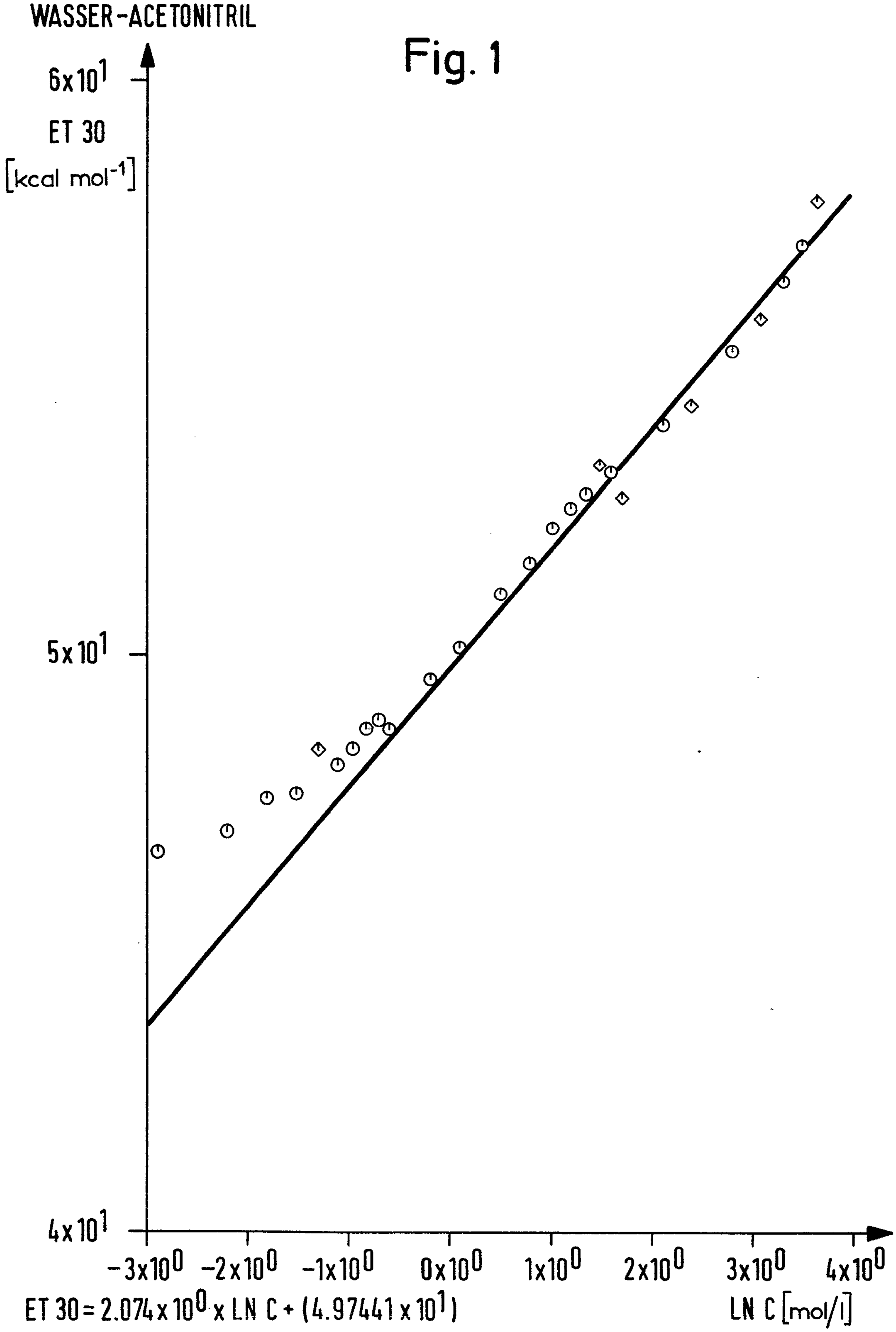

WASSER-ACETONITRIL
6x10^1
ET 30
[kcal mol^-1]
5x10^1
4x10^1
-3x10^0
-2x10^0
-1x10^0
0x10^0
1x10^0
2x10^0
3x10^0
4x10^0
ET 30 = 2.074 x 10^0 x LN C + (4.97441 x 10^1)
LN C [mol/l]

Fig. 2

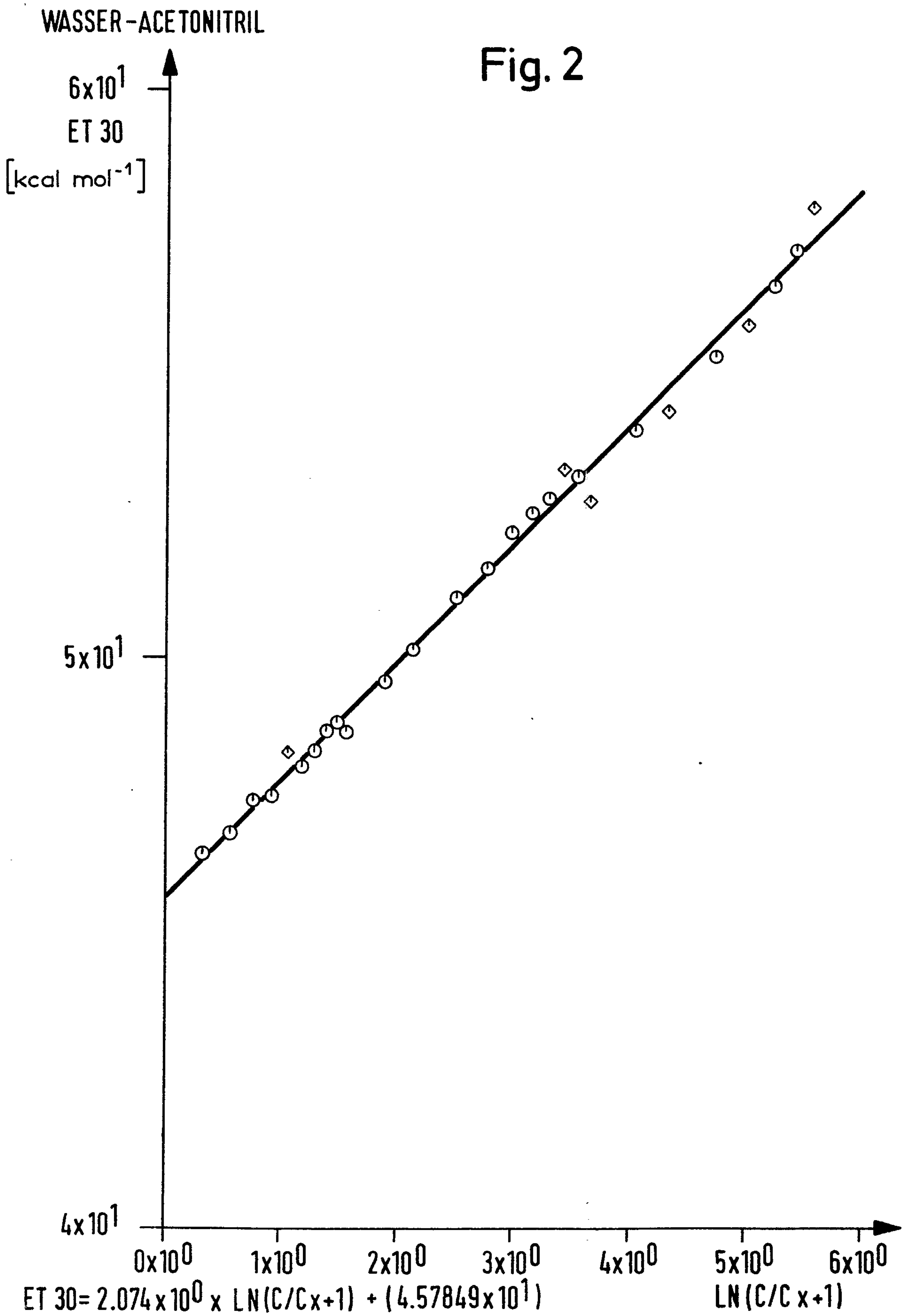
WASSER-ACETONITRIL
6x10^1
ET 30
[kcal mol^-1]
5x10^1
4x10^1
0x10^0
1x10^0
2x10^0
3x10^0
4x10^0
5x10^0
6x10^0
ET 30= 2.074x10^0 x LN(C/Cx+1) + (4.57849x10^1)
LN(C/C x+1)